# EUROPEAN PATENT APPLICATION

(11) **EP 3 327 894 A1**
(43) Date of publication of application: **30.05.2018**
(21) Application number: 16830714.8
(22) Date of filing: 06.07.2016
(51) Int. Cl.: H02J 7/02, H04L 29/06, B60R 16/03

(54) **WIRELESS CHARGING DEVICE FOR VEHICLE**

(30) Priority: 24.07.2015 KR 20150104847
(71) Applicant: LG Innotek Co., Ltd., Seoul, 04637 (KR)
(72) Inventor: KWON, Yong Il, Seoul 04637 (KR); LEE, Jae Kyu, Seoul 04637 (KR)
(74) Representative: DREISS Patentanwälte PartG mbB
(86) International application number: PCT/KR2016/007285
(87) International publication number: WO 2017/018681

(57) **Abstract**

The present invention provides a wireless power transmitting device comprising: a power transmission unit for transmitting a wireless power signal to a subject being charged; a feedback reception unit for receiving a feedback signal transferred from the subject being charged; a decoding unit for decoding the feedback signal; and an encoding unit for encoding the decoded signal into a format for short-range communication.

## Description

### [Technical Field]

Embodiments relate to a wireless charging device, and more particularly, to a wireless charging device mountable in a vehicle.

### [Background Art]

Wireless charging is a technique of charging a battery by causing current to flow through electromagnetic induction. In this technique, a magnetic field generated in a primary coil of a charging pad induces current in a secondary coil of the battery part. This technique is suitable for portable communication devices and electric vehicles that require a large capacity battery. In addition, with this technique, contacts are not exposed to the outside. Accordingly, there is almost no risk of electric leakage and poor charging caused by the wired charging technique may be prevented.

As wireless charging technology has become entrenched, various charging pads have been developed to provide wireless charging power signals. Generally, a charging pad includes a coil or antenna for transmitting a wireless charging power signal, and a substrate including a circuit unit for supplying a power signal to the coil or antenna according to the wireless charging technology and controlling the power signal.

Wireless charging devices may be used not only in buildings such as a home or business, but also in a vehicle. A wireless charging device mounted in a vehicle may be used to charge the portable devices of the occupants including the driver. When the wireless charging device is operatively connected with electronic devices (for example, a control system, a vehicle navigation system, an audio device, a radio device, etc.) mounted in the vehicle, it may provide information such as the operation state of the wireless charging device to the occupants.

There is no universal guideline for a communication interface for operative connection between electronic devices (systems) in a vehicle and a wireless charging device. Therefore, when the manufacturer of an electronic device to be mounted in the vehicle is different from the manufacturer the wireless charging device, there is a need for separate research and testing for linking each electronic device to the wireless charging device, and time and cost may increase.

### [Disclosure]

### [Technical Problem]

Embodiments provide a method and apparatus for connecting a wireless power transmission/reception device for transmitting/receiving a wireless power signal for wireless charging with another system.

In addition, embodiments provide a method and apparatus for linking a wireless power transmission device mounted in a vehicle to an in-vehicle electronic control system.

In addition, embodiments may provide an interface that delivers the state/information on the wireless charging operation performed in the vehicle to the occupant and allows the occupant to easily control the wireless charging operation.

The technical objects that can be achieved through the embodiments are not limited to what has been particularly described hereinabove and other technical objects not described herein will be more clearly understood by persons skilled in the art from the following detailed description.

### [Technical Solution]

In one embodiment, a wireless power transmission device may include a power transmission unit configured to transmit a wireless power signal to an object-to-be-charged, a feedback reception unit configured to receive a feedback signal transmitted from the object-to-be-charged and to control the power transmission unit, and an encoding unit configured to encode a signal received from the feedback reception unit into a format for short-range communication.

The power transmission unit may transmit the wireless power signal using at least one of a magnetic induction scheme or a magnetic resonance scheme.

The feedback reception unit may decode the feedback signal according to the transmission scheme of the wireless power signal of the power transmission unit, and transmit the decoded feedback signal to the encoding unit.

The format for the short-range communication may be used in at least one of Bluetooth, Near Field Communication (NFC), ZigBee, or Wi-Fi.

When the NFC is used, the format for the short-range communication may correspond to a first protocol (Logical Link Control Protocol (LLCP)) supporting bidirectional data communication (Peer-to-Peer mode) in a frequency band of 13.56 MHz, wherein, when the Bluetooth is used, the format may correspond to a second protocol (Logical Link Control and Adaptation Protocol (L2CAP)) used in the Bluetooth, wherein, when the Wi-Fi is used, the format may correspond to at least one of legacy 802.11, 802.11a, 802.11b, 802.11g, 802.11n or 802.11ac protocol.

The feedback signal may include at least one of a state of connection with the object-to-be-charged, a charging level of the object-to-be-charged, or a temperature of the object-to-be-charged.

The wireless power transmission device may further include a state transmission unit configured to wirelessly transmit an encoded signal.

In another embodiment, a wireless power reception device may include a power reception unit configured to receive a wireless power signal, a feedback transmission unit configured to transmit at least one of a reception state of the power reception unit, a charging level of a load, or a temperature over a feedback signal, an encoding unit configured to encode information contained in the feedback signal into a format for short-range communication, and a state transmission unit configured to wirelessly transmit an encoded signal

The power reception unit may receive the wireless power signal using at least one of a magnetic induction scheme and a magnetic resonance scheme.

The format for the short-range communication may be used in at least one of Bluetooth, Near Field Communication (NFC), ZigBee, or Wi-Fi.

When the NFC is used, the format for the short-range communication may correspond to a first protocol (Logical Link Control Protocol (LLCP)) supporting bidirectional data communication (Peer-to-Peer mode) in a frequency band of 13.56 MHz, wherein, when the Bluetooth is used, the format may correspond to a second protocol (Logical Link Control and Adaptation Protocol (L2CAP)) used in the Bluetooth, wherein, when the Wi-Fi is used, the format may correspond to at least one of legacy 802.11, 802.11a, 802.11b, 802.11g, 802.11n or 802.11ac protocol.

The wireless power reception device may further include a controller configured to transmit a command for stopping wireless charging to the feedback transmission unit in response to an externally input control signal.

In another embodiment, a control system for a vehicle operatively connected with a wireless power transmission device for wirelessly charging a portable device of an occupant may include a power supply configured to supply power to the wireless power transmission device, a state reception unit configured to receive, from at least one of the wireless power transmission device or the portable device, a wireless power reception state, a charging level, and a temperature of the portable device in a format for short-range communication, and a display unit configured to display information transmitted to the state reception unit.

The control system may further include a controller configured to calculate a charging completion time based on the reception state and the charging level and to transmit the charge completion time to the display unit.

The controller may transmit, to at least one of the power supply, the wireless power transmission device, or the portable device, a signal for stopping the wireless charging based on a state of the power supply, and the reception state and the charging level received through the state reception unit.

The wireless charging may be performed using at least one of a magnetic induction scheme or a magnetic resonance scheme.

The format for the short-range communication may include at least one of Bluetooth, Near Field Communication (NFC), ZigBee, or Wi-Fi.

The format for the short-range communication may correspond to a first protocol (Logical Link Control Protocol (LLCP)) supporting bidirectional data communication (Peer-to-Peer mode) in a frequency band of 13.56 MHz in the NFC.

The format for the short-range communication may correspond to a second protocol (Logical Link Control and Adaptation Protocol (L2CAP)) used in the Bluetooth.

The format for the short-range communication may correspond to at least one of legacy 802.11, 802.11a, 802.11b, 802.11g, 802.11n or 802.11ac protocol in the Wi-Fi.

The above-described aspects of the present disclosure are merely a part of preferred embodiments of the present disclosure. Those skilled in the art will derive and understand various embodiments reflecting the technical features of the present disclosure from the following detailed description of the present disclosure.

### [Advantageous Effects]

The method and apparatus according to the embodiments have the following effects.

According to the embodiments, devices for wireless charging may be operatively connected with an external system, and therefore control of wireless charging may be facilitated.

According to the embodiments, an occupant may be allowed to easily control the wireless charging process through an interface that delivers the state/information on the wireless charging operation performed in a vehicle to the occupant.

It will be appreciated by those skilled in the art that that the effects that can be achieved through the embodiments of the present disclosure are not limited to those described above and other advantages of the present disclosure will be more clearly understood from the following detailed description.

### [Description of Drawings]

The accompanying drawings, which are included to provide a further understanding of the disclosure and are incorporated in and constitute a part of this application, illustrate embodiments of the disclosure and together with the description serve to explain the principle of the disclosure. It is to be understood, however, that the technical features of the present disclosure are not limited to the specific drawings, and the features disclosed in the drawings may be combined with each other to constitute a new embodiment.
FIG. 1 illustrates a first wireless charging system for vehicles.
FIG. 2 illustrates a second wireless charging system for vehicles.
FIG. 3 illustrates a third wireless charging system for vehicles.
FIG. 4 illustrates a fourth wireless charging system for vehicles.
FIG. 5 illustrates a fifth wireless charging system for vehicles.
FIG. 6 illustrates a sixth wireless charging system for vehicles.
FIGs. 7A and 7B illustrate a feedback signal of a wireless charging device that is usable in the first to sixth wireless charging systems for vehicles.
FIGs. 8A and 8B illustrate a state transmission signal according to the Bluetooth scheme of a wireless charging device that is usable in the first to sixth wireless charging systems for vehicles.
FIG. 9 illustrates a state transmission signal according to the Near Field Communication (NFC) scheme of a wireless charging device that is usable in the first to sixth wireless charging systems for vehicles.

### [Detailed Description]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

In the description of the embodiments, it is to be understood that, when an element is described as being "on" or "under" another element, it can be directly "on" or "under" another element or can be indirectly formed such that one or more other intervening elements are also present between the two elements. The expression "on" or "under" may represent not only an upward direction but also a downward direction with respect to one element.

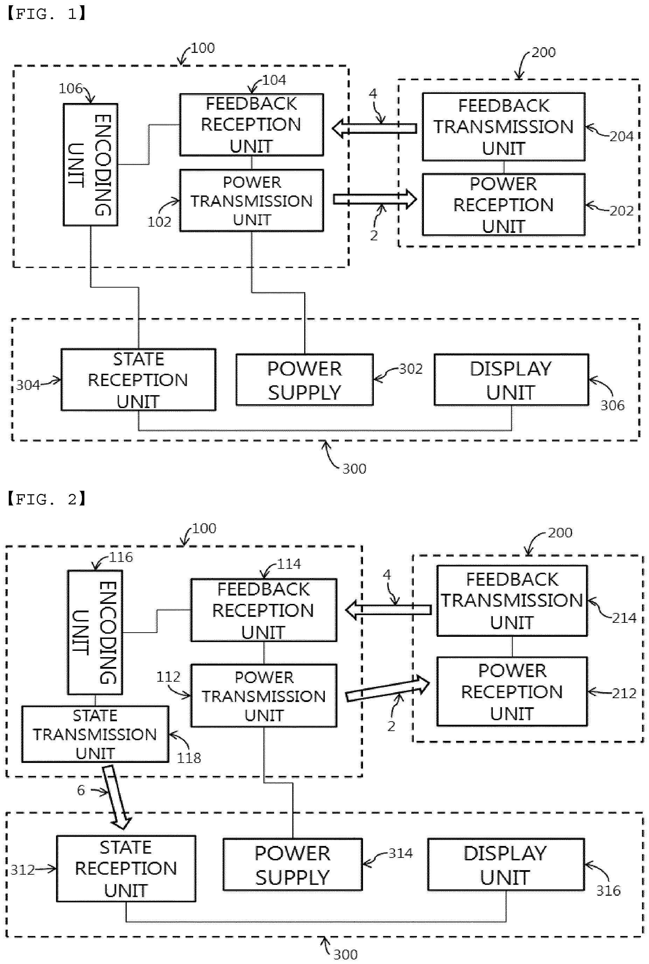

FIG. 1 illustrates a first wireless charging system for vehicles.

As shown in the figure, the first wireless charging system for vehicles may include a wireless power transmission device 100, a wireless power reception device 200, and a vehicle control system 300.

The wireless power transmission device 100 is configured to transmit a wireless power signal 2 and may be embedded in a vehicle or designed to be optionally connected to the vehicle by an occupant. The wireless power transmission device 100 may include a power transmission unit 102 configured to transmit a wireless power signal 2 to the wireless power reception device 200 and a feedback reception unit 104 configured to receive a feedback signal 4 from the wireless power reception device 200. The feedback reception unit 104 may control the operation of the power transmission unit 102 after recognizing the feedback signal 4. The wireless power transmission device 100 may generate the wireless power signal 2 through magnetic induction or magnetic resonance.

The wireless power reception device 200 is a device that receives the wireless power signal 2 from the wireless power transmission device 100. For example, the wireless power reception device 200 may be a portable terminal or the like used by a vehicle occupant. The wireless power reception device 200 may include a power reception unit 202 configured to receive the wireless power signal 2 from the wireless power transmission device 100 and a feedback transmission unit 204 configured to feed back information such as the connection state, the charging level and the temperature, which need to be checked during the process of wireless charging, to the wireless power transmission device 100.

The wireless power transmission device 100 may be connected to a system in a vehicle to receive power.

The vehicle control system 300 may include a power supply 302 configured to supply power to the wireless power transmission device 100, a state reception unit 304 configured to receive information on the wireless charging operation from the wireless power transmission device 100, and a display unit 306 configured to show the information received from the state reception unit 304 to the occupant.

The power supply 302 may be connected to a battery or a generator included in the vehicle to supply power required by the wireless power transmission device 100.

The display unit 306 may include a display interface included in the vehicle. It may display information such as radio broadcast and navigation according to the operation mode, or display the progress of the wireless charging operation.

Here, the information related to the wireless charging operation displayed on the display unit 306 may be received from the wireless charging transmission device 100. The wireless charging transmission device 100 may further include an encoding unit 106 configured to encode the state information (e.g., connection state, charging level, temperature, etc.) on the wireless charging operation recognized by the feedback reception unit 104 in a preset format.

The encoding unit 106 is used to exchange data between the wireless charging transmission device 100 and the vehicle control system 300. The method used by the encoding unit 106 to process data may depend on the data processing/recognition technology of the devices mounted on the vehicle control system 300. For example, in order to encode the state information on the wireless charging operation, the encoding unit 106 may use data formats which are used in wireless transmission schemes such as Near Field Communication (NFC), Bluetooth, Bluetooth Low Energy (BLE), and ZigBee.

If the wireless charging transmission device 100 is mounted in a vehicle and connected to the vehicle control system 300 by wire, the wireless charging transmission device 100 may transmit an encoded signal to the state reception unit 304 in the vehicle control system 300 by wire, instead of wirelessly transmitting the encoded signal.

FIG. 2 illustrates a second wireless charging system for vehicles.

As shown in the figure, the second wireless charging system for vehicles may include a wireless power transmission device 100, a wireless power reception device 200, and a vehicle control system 300.

The wireless power transmission device 100 is configured to transmit a wireless power signal 2 and may be embedded in a vehicle or designed to be optionally connected to the vehicle by an occupant. The wireless power transmission device 100 may include a power transmission unit 112 configured to transmit a wireless power signal 2 to the wireless power reception device 200 and a feedback reception unit 114 configured to receive a feedback signal 4 from the wireless power reception device 200. The feedback reception unit 114 may sense the feedback signal 4 and then control the operation of the power transmission unit 112. Further, the wireless power transmission device 100 may generate the wireless power signal 2 through magnetic induction or magnetic resonance.

The wireless power reception device 200 is a device that receives the wireless power signal 2 from the wireless power transmission device 100. For example, the wireless power reception device 200 may be a portable terminal or the like used by a vehicle occupant. The wireless power reception device 200 may include a power reception unit 322 configured to receive the wireless power signal 2 from the wireless power transmission device 100, and a feedback transmission unit 324 configured to feedback information such as the connection state, the charging level and the temperature, which need to be checked during the process of wireless charging, to the wireless power transmission device 100.

The wireless power transmission device 100 may be connected to a system in a vehicle to receive power.

The vehicle control system 300 may include a power supply 312 configured to supply power to the wireless power transmission device 100, a state reception unit 314 configured to receive information on the wireless charging operation from the wireless power transmission device 100, and a display unit 316 configured to show the information received from the state reception unit 314 to the occupant.

The power supply 312 may be connected to a battery or a generator included in the vehicle to supply power required by the wireless power transmission device 100.

The display unit 316 may include a display interface included in the vehicle. The display unit 316 may display information such as radio broadcast and navigation according to the operation mode, or display the progress of the wireless charging operation.

Here, the information related to the wireless charging operation displayed on the display unit 316 may be received from the wireless charging transmission device 100. The wireless charging transmission device 100 may further include an encoding unit 116 configured to encode the state information (e.g., connection state, charging level, temperature, etc.) on the wireless charging operation recognized by the feedback reception unit 114 in a preset format, and a state transmission unit 118 configured to wirelessly transmit the encoded signal.

The encoding unit 116 is used to exchange data between the wireless charging transmission device 100 and the vehicle control system 300. The method used by the encoding unit 116 to process data may depend on the data processing/recognition technology of the devices mounted on the vehicle control system 300. For example, in order to encode the state information on the wireless charging operation, the encoding unit 116 may use data formats which are used in wireless transmission schemes such as NFC, Bluetooth, Bluetooth Low Energy (BLE), and ZigBee.

The state transmission unit 118 transmits the data generated in relation to the wireless charging operation by the encoding unit 116 to the vehicle control system 300 using the wireless communication technology (6). The state transmission unit 118 may transmit the data using one of the wireless communication schemes such as NFC, Bluetooth, Bluetooth Low Energy (BLE), ZigBee, and Wi-Fi. The encoding unit 116 may encode data related to the wireless charging operation in a data format corresponding to the scheme that is used for the state transmission unit 118 to perform data transmission.

For example, when the state transmission unit 118 transmits data to the vehicle control system 300 using the scheme of NFC, the encoding unit 116 may encode the state information on the wireless charging operation using a first protocol (Logical Link Control Protocol (LLCP)), which supports bidirectional data communication (Peer-to-Peer mode) in the frequency band of 13.56 MHz.

When the state transmission unit 118 uses Bluetooth, the encoding unit 116 may encode the state information on the wireless charging operation using a second protocol (Logical Link Control and Adaptation Protocol (L2CAP)), which is used for Bluetooth.

When the state transmission unit 118 uses Wi-Fi, the encoding unit 116 may encode the state information on the wireless charging operation so as to be suitable for at least one of the legacy 802.11, 802.11a, 802.11b, 802.11g, 802.11n, and 802.11ac protocols.

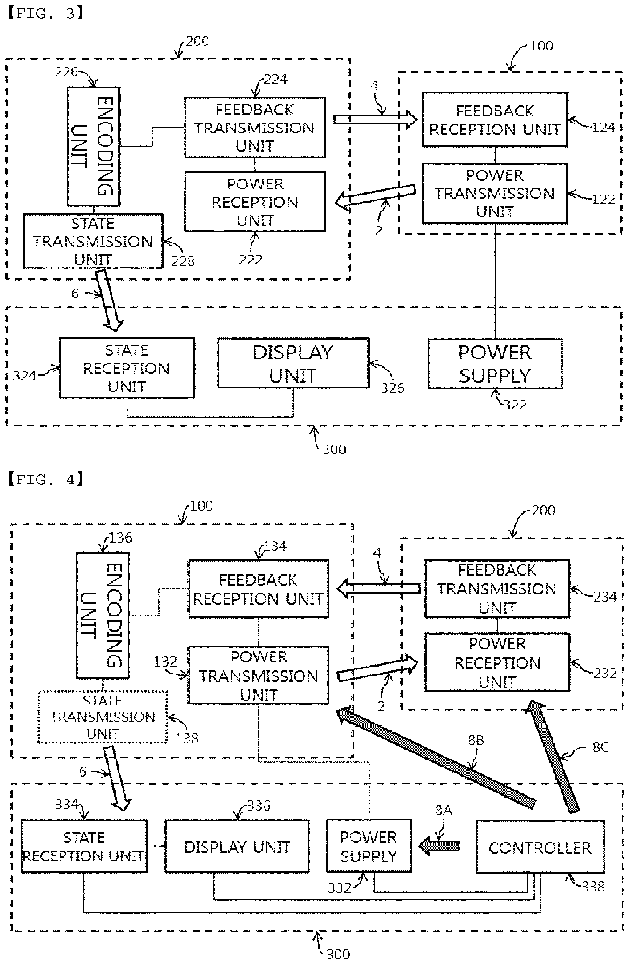

FIG. 3 illustrates a third wireless charging system for vehicles.

As shown in the figure, the third wireless charging system for vehicles may include a wireless power transmission device 100, a wireless power reception device 200, and a vehicle control system 300.

The wireless power transmission device 100 is configured to transmit a wireless power signal 2 and may be embedded in a vehicle or designed to be optionally connected to the vehicle by an occupant. The wireless power transmission device 100 may include a power transmission unit 122 configured to transmit a wireless power signal 2 to the wireless power reception device 200 and a feedback reception unit 124 configured to receive a feedback signal 4 from the wireless power reception device 200. The feedback reception unit 124 may control the operation of the power transmission unit 122 after recognizing the feedback signal 4. The wireless power transmission device 100 may generate the wireless power signal 2 through magnetic induction or magnetic resonance.

The wireless power reception device 200 is a device that receives the wireless power signal 2 from the wireless power transmission device 100. For example, the wireless power reception device 200 may be a portable terminal or the like used by a vehicle occupant. The wireless power reception device 200 may include a power reception unit 222 configured to receive the wireless power signal 2 from the wireless power transmission device 100 and a feedback transmission unit 224 configured to feed back information such as the connection state, the charging level and the temperature, which need to be checked during the process of wireless charging, to the wireless power transmission device 100.

The wireless power transmission device 100 may be connected to a system in a vehicle to receive power.

The vehicle control system 300 may include a power supply 322 configured to supply power to the wireless power transmission device 100, a state reception unit 324 configured to receive information on the wireless charging operation from the wireless power transmission device 100, and a display unit 326 configured to show the information received from the state reception unit 324 to the occupant.

The power supply 322 may be connected to a battery or a generator included in the vehicle to supply power required by the wireless power transmission device 100.

The display unit 326 may include a display interface included in the vehicle. It may display information such as radio broadcast and navigation according to the operation mode, or display the progress of the wireless charging operation.

Here, the information related to the wireless charging operation displayed on the display unit 326 may be received from the wireless charging transmission device 100. The wireless charging reception device 200 may further include an encoding unit 226 configured to encode the state information (e.g., connection state, charging level, temperature, etc.) on the wireless charging operation transmitted to the wireless charging transmission device 100 through the feedback transmission unit 224 in a preset format, and a state transmission unit 228 configured to wirelessly transmit the encoded signal.

The encoding unit 226 is used to exchange data between the wireless charging transmission device 100 and the vehicle control system 300. The method used by the encoding unit 226 to process data may depend on the data processing/recognition technology of the devices mounted on the vehicle control system 300. For example, in order to encode the state information on the wireless charging operation, the encoding unit 226 may use data formats which are used in wireless transmission schemes such as NFC, Bluetooth, Bluetooth Low Energy (BLE), and ZigBee.

The state transmission unit 228 transmits the data generated in relation to the wireless charging operation by the encoding unit 226 to the vehicle control system 300 using the wireless communication technology (6). The state transmission unit 228 may transmit the data using one of the wireless communication schemes such as NFC, Bluetooth, Bluetooth Low Energy (BLE), ZigBee, and Wi-Fi. The encoding unit 226 may encode data related to the wireless charging operation in a data format corresponding to the scheme that is used for the state transmission unit 228 to perform data transmission.

For example, when the state transmission unit 228 transmits data to the vehicle control system 300 using the scheme of NFC, the encoding unit 226 may encode the state information on the wireless charging operation using a first protocol (Logical Link Control Protocol (LLCP)), which supports bidirectional data communication (Peer-to-Peer mode) in the frequency band of 13.56 MHz.

When the state transmission unit 228 uses Bluetooth, the encoding unit 116 may encode the state information on the wireless charging operation using a second protocol (Logical Link Control and Adaptation Protocol (L2CAP)), which is used for Bluetooth.

When the state transmission unit 228 uses Wi-Fi, the encoding unit 226 may encode the state information on the wireless charging operation so as to be suitable for at least one of the legacy 802.11, 802.11a, 802.11b, 802.11g, 802.11n, and 802.11ac protocols.

The wireless charging reception device 200 may be included in a terminal or a computer carried by an occupant. In the case where the portable terminal or computer of the occupant is designed to be capable of data communication using a wireless communication scheme such as NFC, Bluetooth, Bluetooth Low Energy (BLE), ZigBee, Wi-Fi, or the like, the wireless charging reception device 200 may share a data communication module (which may include, for example, the encoding unit 226 and the state transmission unit 228) used in the portable terminal or computer, and thus the feedback transmission unit 224 may deliver transmitted data. In this case, the portable terminal or computer does not need to additionally include a data communication module for the wireless charging reception device 200.

FIG. 4 illustrates a fourth wireless charging system for vehicles.

As shown in the figure, the fourth wireless charging system for vehicles may include a wireless power transmission device 100, a wireless power reception device 200, and a vehicle control system 300.

The wireless power transmission device 100 is configured to transmit a wireless power signal 2 and may be embedded in a vehicle or designed to be optionally connected to the vehicle by an occupant. The wireless power transmission device 100 may include a power transmission unit 132 configured to transmit a wireless power signal 2 to the wireless power reception device 200 and a feedback reception unit 134 configured to receive a feedback signal 4 from the wireless power reception device 200. The feedback reception unit 134 may control the operation of the power transmission unit 132 after recognizing the feedback signal 4. The wireless power transmission device 100 may generate the wireless power signal 2 through magnetic induction or magnetic resonance.

The wireless power reception device 200 is a device that receives the wireless power signal 2 from the wireless power transmission device 100. For example, the wireless power reception device 200 may be a portable terminal or the like used by a vehicle occupant. The wireless power reception device 200 may include a power reception unit 232 configured to receive the wireless power signal 2 from the wireless power transmission device 100 and a feedback transmission unit 234 configured to feedback information such as the connection state, the charging level and the temperature, which need to be checked during the process of wireless charging, to the wireless power transmission device 100.

The wireless power transmission device 100 may be connected to a system in a vehicle to receive power.

The vehicle control system 300 may include a power supply 332 configured to supply power to the wireless power transmission device 100, a state reception unit 334 configured to receive information on the wireless charging operation from the wireless power transmission device 100, and a display unit 336 configured to show the information received from the state reception unit 334 to the occupant.

The power supply 332 may be connected to a battery or a generator included in the vehicle to supply power required by the wireless power transmission device 100.

The display unit 336 may include a display interface included in the vehicle. It may display information such as radio broadcast and navigation according to the operation mode, or display the progress of the wireless charging operation.

Here, the information related to the wireless charging operation displayed on the display unit 336 may be received from the wireless charging transmission device 100. The wireless charging transmission device 100 may further include an encoding unit 136 configured to encode the state information (e.g., connection state, charging level, temperature, etc.) on the wireless charging operation recognized by the feedback reception unit 134 in a preset format.

In addition, according to the connection relationship between the wireless charging transmitter 100 and the vehicle controller 300, the wireless charging transmission device 100 may further include a state transmission unit 138 configured to wirelessly transmit encoded signals. For example, when the wireless charging transmission device 100 is mounted on the vehicle control system 300 and is capable of performing data communication by wire, the state transmission unit 138 for wireless transmission may not be required.

The encoding unit 136 is used to exchange data between the wireless charging transmission device 100 and the vehicle control system 300. The method used by the encoding unit 136 to process data may depend on the data processing/recognition technology of the devices mounted on the vehicle control system 300. For example, in order to encode the state information on the wireless charging operation, the encoding unit 136 may use data formats which are used in wireless transmission schemes such as NFC, Bluetooth, Bluetooth Low Energy (BLE), and ZigBee.

The state transmission unit 138 transmits the data generated in relation to the wireless charging operation by the encoding unit 136 to the vehicle control system 300 using the wireless communication technology (6). The state transmission unit 138 may transmit the data using one of the wireless communication schemes such as NFC, Bluetooth, Bluetooth Low Energy (BLE), ZigBee, and Wi-Fi. The encoding unit 136 may encode data related to the wireless charging operation in a data format corresponding to the scheme that is used for the state transmission unit 138 to perform data transmission.

For example, when the state transmission unit 138 transmits data to the vehicle control system 300 using NFC, the encoding unit 136 may encode the state information on the wireless charging operation using a first protocol (Logical Link Control Protocol (LLCP)), which supports bidirectional data communication (Peer-to-Peer mode) in the frequency band of 13.56 MHz.

When the state transmission unit 138 uses Bluetooth, the encoding unit 116 may encode the state information on the wireless charging operation using a second protocol (Logical Link Control and Adaptation Protocol (L2CAP)), which is used for Bluetooth.

When the state transmission unit 138 uses Wi-Fi, the encoding unit 116 may encode the state information on the wireless charging operation so as to be suitable for at least one of the legacy 802.11, 802.11a, 802.11b, 802.11g, 802.11n, and 802.11ac protocols.

The vehicle control system 300 may further include a controller 338 configured to calculate the charging completion time based on the state information on the wireless charging operation (for example, the connection/reception state, the charging level, etc.) received through the state transmission unit 138 and transmit the same to the display unit 336.

The controller 338 may transmit a signal 8A, 8B, 8C for stopping wireless charging to at least one of the power supply 332, the wireless power transmission device 100, or the wireless power reception apparatus 200, based on the state of the power supply 332 and the state information on the wireless charging operation (for example, the connection/reception state, the charging level, etc.) received through the state reception unit 334.

For example, when there is insufficient power available from the power supply 332, the controller 338 may control the power supply 332 not to supply power to the power transmission unit 132.

For example, when state information on the wireless charging operation indicating that the temperature is high or the wireless charging operation is not normally performed is input, the controller 338 may command the wireless power transmission device 100, the wireless power reception device 200, or both to stop the wireless charging operation in order to secure occupant safety.

The wireless power reception device 200 may further include a controller (not shown) configured to transmit a command for stopping the wireless charging operation to the feedback transmission unit 234 in response to an externally input control signal (for example, the signal 8C).

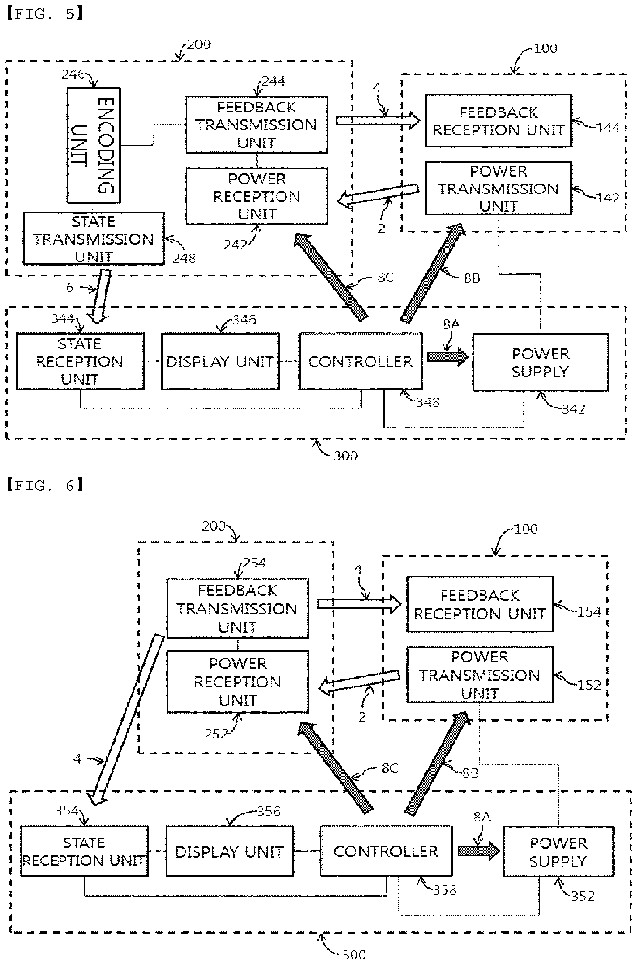

FIG. 5 illustrates a fifth wireless charging system for vehicles.

As shown in the figure, the fifth wireless charging system for vehicles may include a wireless power transmission device 100, a wireless power reception device 200, and a vehicle control system 300.

The wireless power transmission device 100 is configured to transmit a wireless power signal 2 and may be embedded in a vehicle or designed to be optionally connected to the vehicle by an occupant. The wireless power transmission device 100 may include a power transmission unit 142 configured to transmit a wireless power signal 2 to the wireless power reception device 200 and a feedback reception unit 144 configured to receive a feedback signal 4 from the wireless power reception device 200. The feedback reception unit 144 may sense the feedback signal 4 and then control the operation of the power transmission unit 142. Further, the wireless power transmission device 100 may generate the wireless power signal 2 through magnetic induction or magnetic resonance.

The wireless power reception device 200 is a device that receives the wireless power signal 2 from the wireless power transmission device 100. For example, the wireless power reception device 200 may be a portable terminal or the like used by a vehicle occupant. The wireless power reception device 200 may include a power reception unit 242 configured to receive the wireless power signal 2 from the wireless power transmission device 100, and a feedback transmission unit 244 configured to feedback information such as the connection state, the charging level and the temperature, which need to be checked during the process of wireless charging, to the wireless power transmission device 100.

The wireless power transmission device 100 may be connected to a system in a vehicle to receive power.

The vehicle control system 300 may include a power supply 342 configured to supply power to the wireless power transmission device 100, a state reception unit 344 configured to receive information on the wireless charging operation from the wireless power transmission device 100, and a display unit 346 configured to show the information received from the state reception unit 344 to the occupant.

The power supply 342 may be connected to a battery or a generator included in the vehicle to supply power required by the wireless power transmission device 100.

The display unit 346 may include a display interface included in the vehicle. The display unit 346 may display information such as radio broadcast and navigation according to the operation mode, or display the progress of the wireless charging operation.

Here, the information related to the wireless charging operation displayed on the display unit 346 may be received from the wireless charging reception device 200. The wireless charging reception device 200 may further include an encoding unit 246 configured to encode the state information (e.g., connection state, charging level, temperature, etc.) on the wireless charging operation transmitted to the wireless charging transmission device 100 through the feedback transmission unit 244 in a preset format, and a state transmission unit 248 configured to wirelessly transmit the encoded signal.

The encoding unit 246 is used to exchange data between the wireless charging reception device 200 and the vehicle control system 300. The method used by the encoding unit 246 to process data may depend on the data processing/recognition technology of the devices mounted on the vehicle control system 300. For example, in order to encode the state information on the wireless charging operation, the encoding unit 246 may use data formats which are used in wireless transmission schemes such as NFC, Bluetooth, Bluetooth Low Energy (BLE), and ZigBee.

The state transmission unit 248 transmits the data generated in relation to the wireless charging operation by the encoding unit 246 to the vehicle control system 300 using the wireless communication technology (6). The state transmission unit 248 may transmit the data using one of the wireless communication schemes such as NFC, Bluetooth, Bluetooth Low Energy (BLE), ZigBee, and Wi-Fi. The encoding unit 246 may encode data related to the wireless charging operation in a data format corresponding to the scheme that is used for the state transmission unit 248 to perform data transmission.

For example, when the state transmission unit 248 transmits data to the vehicle control system 300 using NFC, the encoding unit 246 may encode the state information on the wireless charging operation using a first protocol (Logical Link Control Protocol (LLCP)), which supports bidirectional data communication (Peer-to-Peer mode) in the frequency band of 13.56 MHz.

When the state transmission unit 248 uses Bluetooth, the encoding unit 246 may encode the state information on the wireless charging operation using a second protocol (Logical Link Control and Adaptation Protocol (L2CAP)), which is used for Bluetooth.

When the state transmission unit 248 uses Wi-Fi, the encoding unit 246 may encode the state information on the wireless charging operation so as to be suitable for at least one of the legacy 802.11, 802.11a, 802.11b, 802.11g, 802.11n, and 802.11ac protocols.

The wireless charging reception device 200 may be included in a terminal or a computer carried by an occupant. In the case where the portable terminal or computer of the occupant is designed to be capable of data communication using a wireless communication scheme such as NFC, Bluetooth, Bluetooth Low Energy (BLE), ZigBee, Wi-Fi, or the like, the wireless charging reception device 200 may share a data communication module (which may include, for example, the encoding unit 246 and the state transmission unit 248) used in the portable terminal or computer, and thus the feedback transmission unit 244 may deliver transmitted data. In this case, the portable terminal or computer does not need to additionally include a data communication module for the wireless charging reception device 200.

The vehicle control system 300 may further include a controller 348 configured to calculate the charging completion time based on the state information on the wireless charging operation (for example, the connection/reception state, the charging level, etc.) received through the state transmission unit 248 and transmit the same to the display unit 346.

The controller 348 may transmit a signal 8A, 8B, 8C for stopping wireless charging to at least one of the power supply 342, the wireless power transmission device 100, or the wireless power reception apparatus 200, based on the state of the power supply 342 and the state information on the wireless charging operation (for example, the connection/reception state, the charging level, etc.) received through the state reception unit 344.

For example, when there is insufficient power available from the power supply 342, the controller 348 may control the power supply 342 not to supply power to the power transmission unit 142.

For example, when state information on the wireless charging operation indicating that the temperature is high or the wireless charging operation is not normally performed is input, the controller 348 may command the wireless power transmission device 100, the wireless power reception device 200, or both to stop the wireless charging operation in order to secure occupant safety.

FIG. 6 illustrates a sixth wireless charging system for vehicles.

As shown in the figure, the sixth wireless charging system for vehicles may include a wireless power transmission device 100, a wireless power reception device 200, and a vehicle control system 300.

The wireless power transmission device 100 is configured to transmit a wireless power signal 2 and may be embedded in a vehicle or designed to be optionally connected to the vehicle by an occupant. The wireless power transmission device 100 may include a power transmission unit 152 configured to transmit a wireless power signal 2 to the wireless power reception device 200 and a feedback reception unit 154 configured to receive a feedback signal 4 from the wireless power reception device 200. The feedback reception unit 154 may sense the feedback signal 4 and then control the operation of the power transmission unit 152. Further, the wireless power transmission device 100 may generate the wireless power signal 2 through magnetic induction or magnetic resonance.

The wireless power reception device 200 is a device that receives the wireless power signal 2 from the wireless power transmission device 100. For example, the wireless power reception device 200 may be a portable terminal or the like used by a vehicle occupant. The wireless power reception device 200 may include a power reception unit 252 configured to receive the wireless power signal 2 from the wireless power transmission device 100, and a feedback transmission unit 254 configured to feed back information such as the connection state, the charging level and the temperature, which need to be checked during the process of wireless charging, to the wireless power transmission device 100.

The feedback transmission unit 254 may transmit other information as well as the temperature information during the wireless charging process. For example, the feedback transmission unit 254 may send the feedback signal 4 to the vehicle control system 300 as well as the wireless charging transmission device 100. For example, in feeding back the state information about the wireless charging operation to the wireless charging transmission device 100, the feedback transmission unit 254 may use data formats which are used in wireless transmission schemes such as Near Field Communication (NFC), Bluetooth, Bluetooth Low Energy (BLE), and ZigBee. If the feedback signal 4 output by the feedback transmission unit 254 uses the aforementioned standardized wireless communication schemes, the vehicle control system 300 may receive the same data as the wireless charging transmission device 100 receives, via a state reception unit 354.

The wireless power transmission device 100 may be connected to a system in the vehicle to receive power.

The vehicle control system 300 may include a power supply 352 configured to supply power to the wireless power transmission device 100, a state reception unit 354 configured to receive information on the wireless charging operation from the wireless power transmission device 100, and a display unit 356 configured to show the information received from the state reception unit 354 to the occupant.

The power supply 352 may be connected to a battery or a generator included in the vehicle to supply power required by the wireless power transmission device 100.

The display unit 356 may include a display interface included in the vehicle. The display unit 356 may display information such as radio broadcast and navigation according to the operation mode, or display the progress of the wireless charging operation. Here, the information related to the wireless charging operation displayed on the display unit 356 may be received from the wireless charging reception device 200.

The vehicle control system 300 may further include a controller 358 configured to calculate the charging completion time based on the state information on the wireless charging operation (for example, the connection/reception state, the charging level, etc.) received through the state transmission unit 258 and transmit the same to the display unit 356.

The controller 358 may transmit a signal 8A, 8B, 8C for stopping wireless charging to at least one of the power supply 352, the wireless power transmission device 100, or the wireless power reception apparatus 200, based on the state of the power supply 352 and the state information on the wireless charging operation (for example, the connection/reception state, the charging level, etc.) received through the state reception unit 354.

For example, when there is insufficient power available from the power supply 352, the controller 358 may control the power supply 352 not to supply power to the power transmission unit 152.

For example, when state information on the wireless charging operation indicating that the temperature is high or the wireless charging operation is not normally performed is input, the controller 358 may command the wireless power transmission device 100, the wireless power reception device 200, or both to stop the wireless charging operation in order to secure occupant safety.

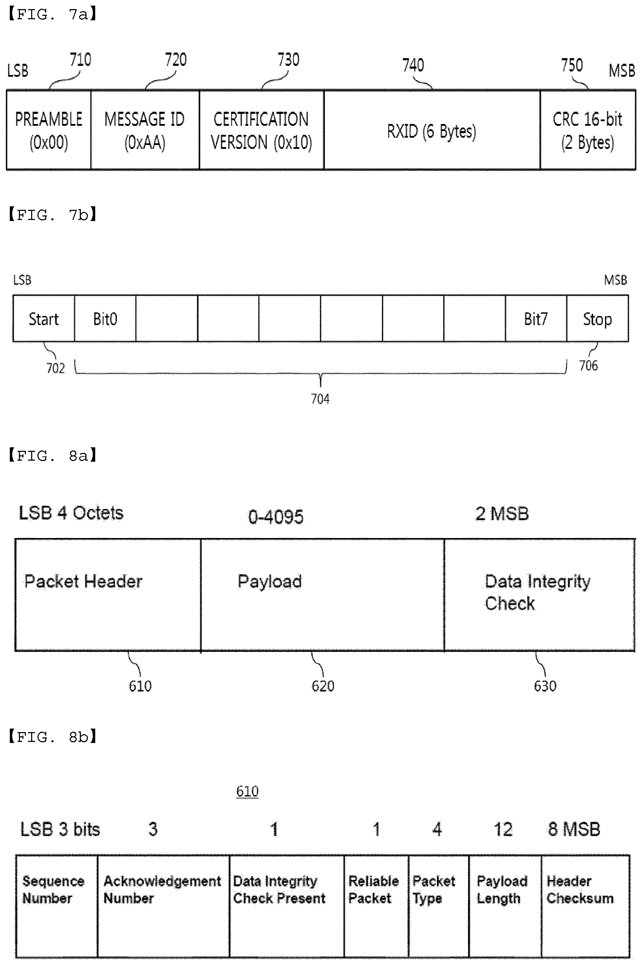

FIGs. 7A and 7B illustrate a feedback signal of a wireless charging device that is usable in the first to sixth wireless charging systems for vehicles. Specifically, FIGs. 7A and 7B illustrate an identification message generated by the wireless charging reception device 200 (see FIGs. 1 to 6) in an identification state.

The wireless charging reception device operates in the identification state before switching to the power transfer state after the signal detection state. In the identification state, the wireless charge reception device may generate a message having the format described in FIG. 7A.

The identification message may include a plurality of series composed of a plurality of bits and may include a preamble 710, a message identifier (ID) 720, a certification version 730, a reception device ID (RXID) 740, and an error check (CRC) 750, which are arranged from the least significant bit (LSB) to the most significant bit (MSB).

The preamble 710 is always positioned at the beginning (0x00) of the identification message. Following the preamble 710, the message ID 720 may be positioned at a specific location (0xAA) and may contain necessary information according to the purpose of use. The certification version 730 contains a certification suite number for authenticating the wireless charging reception device. For example, the upper 4 bits of a 1-byte certification version may represent a major version, and a lower 4 bits of the 1-byte certification version represent a minor version.

The RXID 740 may be configured to have a length of 6 bytes and include an organizationally unique identifier (OUI) that is assigned to the manufacturer and the seller of the wireless charging reception device by the Institute of Electrical and Electronics Engineers (IEEE). The RXID 740 may include not only the OUI but also a unique number assigned by the manufacturer.

Referring to FIG. 7B, the identification message illustrated in FIG. 7A is composed of a plurality of bytes, and each byte of data includes a start bit 702, 8-bit data 704, and a stop bit. That is, all the byte-unit information included in the identification message may be transmitted surrounded by the start bit 702 and the stop bit 706. Generally, the start bit 702 has a logic level of '0' and the stop bit 706 may have a logic level of '1'.

The 8-bit data 704 may contain different values depending on the data or may be determined by a previously made agreement. For example, among the six signals, a third signal used in the electromagnetic induction scheme may be set to the logic level '1', and a fifth signal may be set to the logic level '0'.

In the power transfer state, the wireless charging reception device may transmit, to the wireless charging transmission device, at least one of a first signal (P_Dec) for notifying that the operating frequency has been reduced, a second signal (P_Inc) for notifying that the operating frequency has been increased, or a third signal (NoCh) for notifying that the operating frequency has not been changed. The wireless charging reception device transmits the above signals to the wireless charging transmission device at a time when change in operation occurs, without setting certain time intervals. For example, if the charging power is higher than a reference charging limit (e.g., the range of voltage levels in the coil, VrefL to VrefH) of the wireless charge reception device due to the operating frequency of the currently transmitted wireless power signal, the wireless charge reception device may send the second signal (P_Inc) to the wireless charging transmission device to allow the wireless charging transmission device to lower the power of the wireless power signal. On the other hand, when the charging power is lower than the charging limit due to the operating frequency of the currently transmitted wireless power signal, the wireless charging reception device may send a first signal (P_Dec) to the wireless charging transmission device to allow the wireless charging transmission device to increase the power of the wireless power signal.

In the end-of-charge state, the wireless charge reception device may transmit an end-of-charge signal to the wireless charge transmission device. The wireless charge reception device may continue to transmit the end-of-charge signal until the wireless charging transmission device stops transmitting power. Here, the end-of-charge signal may be classified into several types.

For example, when the wireless charging reception device is fully charged and informs the wireless charging transmission device that charging has been completed, the end-of-charge signal may have a value (in units of mA) corresponding to 5% of the maximum output current value Imax of the wireless charging reception device.

When a load (e.g., a battery) connected to the wireless charge reception device is removed in the middle of wireless charging, charging can no longer be performed. In this case, the end-of-charge signal may have a value of up to about 25 milliamperes (mA). To ensure safe operation, even if the load is reconnected to the wireless charging reception device, charging may be resumed only after a certain period of time (e.g., about 40 seconds).

When an error occurs in the process of controlling the charging operation of the wireless charging reception device, the power transfer state may be maintained. To cope with this case, the wireless charging reception device may transmit an end-of-charge signal to the wireless charging transmission device after a predetermined time such that the power transfer state is not maintained longer than the predetermined time (for example, 40 minutes).

FIGs. 8A and 8B illustrate a state transmission signal according to the Bluetooth scheme of a wireless charging device that is usable in the first to sixth wireless charging systems for vehicles. Specifically, FIGs. 8A and 8B illustrate a host controller interface (HCI) used in the Bluetooth system. The Bluetooth system may have a different structure of data (packet) for transmission/reception of data depending on the type of the hardware interface.

FIG. 8A illustrates a packet structure in the case of using a universal asynchronous receiver-transmitter (UART) among Bluetooth systems. The packet may include a packet header 610 having a size of 4 octets, a payload 620 having a size of 0 to 4095 octets, and a data integrity check 630 having a size of 2 octets. Here, the data integrity check 630 may be optionally included.

FIG. 8B illustrates the packet header 610 illustrated in FIG. 8A. The packet header 610 may include a sequence number of 3 bits, an acknowledge number of 3 bits, a Data Integrity Check Present bit, a Reliable Packet bit, a Packet Type of 4 bits, a Payload Length of 12 bits, and a Header Checksum of 8 bits.

For example, in the case where the wireless charging transmission device 100 (see FIGs. 1 to 6) or the wireless charging reception device 200 (see FIGs. 1 to 6) transmits the state information on the wireless charging operation according to the Bluetooth scheme, it may arrange the state information in the payload region.

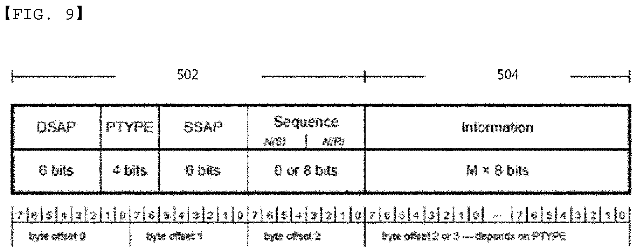

FIG. 9 illustrates a state transmission signal according to the Near Field Communication (NFC) scheme of a wireless charging device that is usable in the first to sixth wireless charging systems for vehicles.

As shown in the figure, a packet of the first protocol (Logical Link Control Protocol (LLCP)) used in Near Field Communication (NFC) may include a header 502 and a payload 504.

The header 502 may include a destination service access point (DSAP) including a destination address of the packet, a payload type (PTYPE) for identifying the type of data, a source service access point (SSAP) including the source address, and a sequence number.

The payload 504 may include data to be transmitted (for example, state information on the wireless charging operation). The payload 504 may have M x 8 bits (i.e., M octets), where M may be an integer ranging from zero to the limit allowed in the NFC scheme.

Although not shown, the wireless charging system for vehicles may use wireless communication technologies such as ZigBee and Wi-Fi in addition to Bluetooth or Near Field Communication (NFC).

Some of the components included in the device according to the above-described examples may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored thereon and executed in a distributed manner. Functional programs, code, and code segments for implementing the method described above may be easily inferred by programmers in the art to which the embodiments pertain.

It will be apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their equivalents, and all changes coming within the meaning and equivalency range of the appended claims are intended to be embraced therein.

## Claims

1. A wireless power transmission device comprising:
a power transmission unit configured to transmit a wireless power signal to an object-to-be-charged;
a feedback reception unit configured to receive a feedback signal transmitted from the object-to-be-charged and to control the power transmission unit; and
an encoding unit configured to encode a signal received from the feedback reception unit into a format for short-range communication.

2. The wireless power transmission device according to claim 1, wherein the power transmission unit transmits the wireless power signal using at least one of a magnetic induction scheme or a magnetic resonance scheme.

3. The wireless power transmission device according to claim 1, wherein the feedback reception unit decodes the feedback signal according to the transmission scheme of the wireless power signal of the power transmission unit, and transmits the decoded feedback signal to the encoding unit.

4. The wireless power transmission device according to claim 1, wherein the format for the short-range communication is used in at least one of Bluetooth, Near Field Communication (NFC), ZigBee, or Wi-Fi.

5. The wireless power transmission device according to claim 4, wherein, when the NFC is used, the format for the short-range communication corresponds to a first protocol (Logical Link Control Protocol (LLCP)) supporting bidirectional data communication (Peer-to-Peer mode) in a frequency band of 13.56 MHz,
wherein, when the Bluetooth is used, the format corresponds to a second protocol (Logical Link Control and Adaptation Protocol (L2CAP)) used in the Bluetooth,
wherein, when the Wi-Fi is used, the format corresponds to at least one of legacy 802.11, 802.11a, 802.11b, 802.11g, 802.11n or 802.11ac protocol.

6. The wireless power transmission device according to claim 1, wherein the feedback signal comprises at least one of a state of connection with the object-to-be-charged, a charging level of the object-to-be-charged, or a temperature of the object-to-be-charged.

7. The wireless power transmission device according to claim 1, further comprising:
a state transmission unit configured to wirelessly transmit an encoded signal.

8. A wireless power reception device comprising:
a power reception unit configured to receive a wireless power signal;
a feedback transmission unit configured to transmit at least one of a reception state of the power reception unit, a charging level of a load, or a temperature over a feedback signal;
an encoding unit configured to encode information contained in the feedback signal into a format for short-range communication; and
a state transmission unit configured to wirelessly transmit an encoded signal

9. The wireless power reception device according to claim 8, wherein the power reception unit receives the wireless power signal using at least one of a magnetic induction scheme and a magnetic resonance scheme.

10. The wireless power reception device according to claim 8, wherein the format for the short-range communication is used in at least one of Bluetooth, Near Field Communication (NFC), ZigBee, or Wi-Fi.

11. The wireless power reception device according to claim 10, wherein, when the NFC is used, the format for the short-range communication corresponds to a first protocol (Logical Link Control Protocol (LLCP)) supporting bidirectional data communication (Peer-to-Peer mode) in a frequency band of 13.56 MHz,
wherein, when the Bluetooth is used, the format corresponds to a second protocol (Logical Link Control and Adaptation Protocol (L2CAP)) used in the Bluetooth,
wherein, when the Wi-Fi is used, the format corresponds to at least one of legacy 802.11, 802.11a, 802.11b, 802.11g, 802.11n or 802.11ac protocol.

12. The wireless power reception device according to claim 8, further comprising:
a controller configured to transmit a command for stopping wireless charging to the feedback transmission unit in response to an externally input control signal.

13. A control system for a vehicle operatively connected with a wireless power transmission device for wirelessly charging a portable device of an occupant, the control system comprising:
a power supply configured to supply power to the wireless power transmission device;
a state reception unit configured to receive, from at least one of the wireless power transmission device or the portable device, a wireless power reception state, a charging level, and a temperature of the portable device in a format for short-range communication; and
a display unit configured to display information transmitted to the state reception unit.

14. The control system according to claim 13, further comprising:
a controller configured to calculate a charging completion time based on the reception state and the charging level and to transmit the charge completion time to the display unit.

15. The control system according to claim 14, wherein the controller transmits, to at least one of the power supply, the wireless power transmission device, or the portable device, a signal for stopping the wireless charging based on a state of the power supply, and the reception state and the charging level received through the state reception unit.

16. The control system according to claim 13, wherein the wireless charging is performed using at least one of a magnetic induction scheme or a magnetic resonance scheme.

17. The control system according to claim 16, wherein the format for the short-range communication comprises at least one of Bluetooth, Near Field Communication (NFC), ZigBee, or Wi-Fi.

18. The control system according to claim 17, wherein the format for the short-range communication corresponds to a first protocol (Logical Link Control Protocol (LLCP)) supporting bidirectional data communication (Peer-to-Peer mode) in a frequency band of 13.56 MHz in the NFC.

19. The control system according to claim 17, wherein the format for the short-range communication corresponds to a second protocol (Logical Link Control and Adaptation Protocol (L2CAP)) used in the Bluetooth.

20. The control system according to claim 17, wherein the format for the short-range communication corresponds to at least one of legacy 802.11, 802.11a, 802.11b, 802.11g, 802.11n or 802.11ac protocol in the Wi-Fi.
